# EUROPÄISCHE PATENTSCHRIFT

(11) **EP 3 752 780 B1**
(45) Veröffentlichungstag und Bekanntmachung des Hinweises auf die Patenterteilung: **22.09.2021**
(21) Anmeldenummer: 19721249.1
(22) Anmeldetag: 26.04.2019
(51) Int. Cl.: F27B 7/20, C04B 2/10, F27B 19/04, C04B 7/43

(54) **OXYFUEL-KLINKERHERSTELLUNG OHNE REZIRKULATION DER VORWÄRMERABGASE**
CLINKER PRODUCTION WITH OXYFUEL PROCESS WITHOUT RECIRCULATION OF THE PREHEATER EXHAUST GASES
FABRICATION DE CLINKER AVEC PROCÉDÉ OXY-FUEL SANS RECIRCULATION DES GAZ DE PRÉCHAUFFEUR

(30) Priorität: 30.04.2018 DE 102018206674
(43) Veröffentlichungstag der Anmeldung: 23.12.2020
(73) Patentinhaber: thyssenkrupp Industrial Solutions AG, 45143 Essen (DE)
(72) Erfinder: LEMKE, Jost, 59320 Ennigerloh (DE); WILLMS, Eike, 44309 Dortmund (DE)
(74) Vertreter: thyssenkrupp Intellectual Property GmbH
(86) Internationale Anmeldenummer: PCT/EP2019/060765
(87) Internationale Veröffentlichungsnummer: WO 2019/211196

(56) Entgegenhaltungen:
- EP-A1- 1 923 367
- EP-A1- 2 952 244
- WO-A1-2010/067223
- WO-A1-2011/001044
- US-A1- 2015 037 745
- US-A1- 2017 267 582

## Beschreibung

Die vorliegende Erfindung betrifft Verfahren zur Herstellung von Zementklinker wobei keine Rezirkulation der Vorwärmerabgase erfolgt.

Aus dem Stand der Technik sind Verfahren und Anlagen bekannt, bei dem Luft im Klinkerkühler eingeleitet und vorgewärmt wird, wobei ein Teil dieser Luft in den Ofen fließen kann. Weiterhin ist es bekannt, dem Kühler anstelle von Luft Mischungen aus CO₂ und O₂ aufzugeben. Zur Abtrennung von Kohlendioxid soll Zementklinker oft unter Ausschluss von Stickstoff gebrannt werden. Dazu wird dann statt Verbrennnungsluft im Calcinatorbereich reiner Sauerstoff verwendet. Das Abgas besteht dann hauptsächlich aus CO₂ und Wasserdampf und enthält nur wenig Sauerstoff und Stickstoff. Dieses Abgas lässt sich vergleichsweise einfach zu reinem CO₂ aufbereiten. Alle verfügbaren Konzepte dazu sehen stets eine Rezirkulation von Vorwärmerabgasen vor, um die Prozesstemperaturen und Volumenströme im Vergleich zum Stand der Technik nicht wesentlich zu verändern.
Beispiele für Stand der Technik sind EP 1 037 005 B1, JP 2007-126328 A, WO 2010/046345 A1, WO 2011/001044 A1, EP 1923367 A1, US 2017/267582, WO 2010/067223 A1 oder EP 2952244 A1.

Aufgrund stetig steigender Anforderungen an die Ökonomie und Ökologie besteht nach wie vor ein Bedarf an verbesserten Anlagen und Verfahren für die Herstellung von Zementklinker.

Aufgabe der vorliegenden Erfindung war es demgemäß unter anderem ein verbessertes Verfahren für die Herstellung von Zementklinker zur Verfügung zu stellen, welche die Nachteile des Standes der Technik nicht aufweisen, bzw. gegenüber den Verfahren des Standes der Technik im Hinblick auf Ökonomie und Ökologie verbessert sind. Weiterhin war es eine Aufgabe der vorliegenden Erfindung, bestehende Verfahren derart zu verbessern, dass auf eine Abgasrezirkualtion weitestgehend verzichtet werden kann.

Gelöst wird die Aufgabe im Rahmen der vorliegenden Erfindung durch die Gegenstände der anhängenden Ansprüche, wobei die Unteransprüche bevorzugte Ausgestaltungen darstellen.

Weitere erfindungsgemäße Ausgestaltungen ergeben sich aus der nachfolgenden Beschreibung.

Die vorliegende Erfindung betrifft in einer Ausführungsform eine Drehofenanlage zur Herstellung von Zementklinker, die eine Vorrichtung zur Zuführung von sauerstoffhaltigem Gas, das einen Anteil von 15 Vol. % oder weniger Stickstoff und einen Anteil von 50 Vol. % oder mehr Sauerstoff aufweist, in den Calcinator und gegebenenfalls zusätzlich den Drehrohrofen, aufweist.

In einer weiteren Ausführungsform betrifft die vorliegende Erfindung entsprechend ein Verfahren zur Herstellung von Zementklinker, wobei ein sauerstoffhaltiges Gas, das einen Anteil von 15 Vol. % oder weniger Stickstoff und einen Anteil von 50 Vol. % oder mehr Sauerstoff aufweist, in den Calcinator und gegebenenfalls zusätzlich den Drehrohrofen geführt wird.

Das erfindungsgemäße Verfahren kann also mit einer Form von Oxyfuel-Verfahren verglichen werden. In Ausführungsformen der vorliegenden Erfindung besteht die Drehofenanlage aus einem Zyklonvorwärmer, einem In-line-Calcinator ohne Tertiärluftleitung, einem Drehofen und einem Kühler. Vom Kühler verläuft eine Leitung für Mittenluft zu einer mittleren Zyklonstufe im Vorwärmer und anschließend zur Rohmühle.

In einigen Ausführungsformen der vorliegenden Erfindung besteht der Zyklonvorwärmer aus einer mehrstufigen Zyklonkaskade, die mit einer deutlich geringeren Gasmenge betrieben wird. Der Abgasvolumenstrom nach Vorwärmer liegt bei etwa 0,50 bis 0,70 Nm³/kg Klinker. Das Verhältnis Aufgabemenge zu Abgas ist dementsprechend höher möglich als bisher und beträgt in einer Variante 1 bis 2 kg/kg Feststoff zu Gas, bevorzugt 1,3 bis 1,9 kg/kg Feststoff zu Gas. Parallel zur Zyklonkaskade ist mindestens eine zusätzliche Zyklonstufe vorgesehen, die mit heißer Luft aus dem Kühler beschickt werden. Bezogen auf den Mehlfluss befinden sich diese zusätzlichen Stufen in einer bevorzugten Ausgestaltung mittig innerhalb der Zyklonkaskade.

In beispielhaften Ausführungsformen außerhalb des Umfangs der vorliegenden Erfindung, kann der Vorwärmer als Wirbelschichtreaktor ausgestaltet sein, insbesondere in Form einer so genannten blasenbildenden Wirbelschicht.

Entsprechend wird bei der vorliegenden Erfindung im Vorwärmschritt das Verhältnis von zugeführtem Feststoff zu Abgas auf größer als 1,0 kg, vorzugsweise größer als 1,3 kg Feststoff je 1 kg Gas, bevorzugt 1 bis 2 kg/kg Feststoff zu Gas, besonders bevorzugt 1,3 bis 1,9 kg/kg Feststoff zu Gas, eingestellt, bzw. die Anlage ist entsprechend konfiguriert, im Vorwärmer ein solches Verhältnis einzustellen (Aufgabemenge zu Abgasstrom).

Der Calcinator entspricht in verschiedenen Ausführungsformen im Wesentlichen dem klassischen Design, wobei das Feststoff-Gas-Verhältnis deutlich höher ist, es treten lokal Feststoffbeladungen von mehr als 2 kg je kg Gas auf, beispielsweise 2 bis 8 kg je kg Gas. Im Calcinator wird der größte Teil (mehr als 60%, beispielsweise ca. 80 % der Brennstoffwärme umgesetzt. Durch das vorhandene Mehl ist trotz anfänglicher Sauerstoffkonzentration von etwa 75 % eine ausreichende Wärmesenke gegeben, die eine Überhitzung verhindert. Falls grobstückiger Ersatzbrennstoff (mit Kantenlängen von >100 mm verbrannt werden soll, ist ggf. ein geneigter Bereich mit höherer Verweildauer für den Brennstoff vorzusehen. Beispiele für solche geneigten Bereiche sind Treppenstufen, Vorschubroste, Rückschubroste etc.

Entsprechend wird in einigen Ausführungsformen der vorliegenden Erfindung im Calcinierschritt das Verhältnis von zugeführtem Feststoff zu Abgas auf größer als 1,0 kg, vorzugsweise größer als 1,3 kg Feststoff je 1 kg Gas, bevorzugt 1 bis 2 kg/kg Feststoff zu Gas, besonders bevorzugt 1,3 bis 1,9 kg/kg Feststoff zu Gas, eingestellt, bzw. die Anlage ist entsprechend konfiguriert, im Calcinator ein solches Verhältnis einzustellen.

Eine Ausgestaltung der vorliegenden Erfindung betrifft ein Verfahren zur Herstellung von hydraulischem Bindemittel, bevorzugt Zementklinker, aus mindestens einem Ausgangsstoff, bestehend aus mindestens den Schritten Vorwärmen des Ausgangsmaterials, Calcinieren des vorgewärmten Ausgangsstoffes, Brennen des calcinierten Ausgangsstoffes mit dem Ziel, hydraulisch aktive Mineralphasen zu erzeugen, Kühlung des hydraulischen Bindemittels, dadurch gekennzeichnet, dass die dem Calcinator zugeführten Gasströme in Summe zu mehr als 50 Vol. % (vorzugsweise zu mehr als 85 Vol. %) aus Sauerstoff bestehen.

In beispielhaften Ausführungsformen außerhalb des Umfangs der vorliegenden Erfindung, können übliche Vorwärmer eingesetzt werden, d.h. Vorwärmer die 1-zügig (bzw. 1-strängig) ausgestaltet sind. Üblicherweise haben solche Vorwärmer mehrere Stufen. In beispielhaften Ausführungsformen außerhalb des Umfangs der vorliegenden Erfindung, weisen die verwendeten 1-zügigen Vorwärmer 5 Stufen auf.

In bevorzugten Ausgestaltungsformen der vorliegenden Erfindung werden Vorwärmer eingesetzt, die 2-zügig (bzw. 2-strängig) ausgestaltet sind.

In bevorzugten Ausgestaltungsformen der vorliegenden Erfindung weisen diese zweizügigen Vorwärmer mehrere Stufen auf, insbesondere 3,4 oder 5 Stufen. Am meisten bevorzugt sind dabei 4-stufige oder 5-stufige Vorwärmer Kaskaden.

Im Rahmen der vorliegenden Erfindung werden dabei die Begriffe "-strängig" und "-zügig" in Zusammenhang mit den Vorwärmern synonym verwendet

Die im Rahmen der vorliegenden Erfindung in einer Ausführungsform bevorzugt eingesetzten Vorwärmer sind dabei analog dem bekannten PASEC-Verfahren ausgestaltet (parallel/sequenzieller Calcinator). Dies bedeutet, dass im Rahmen einer bevorzugten Ausgestaltung der vorliegenden Erfindung ein Calcinator und mehrere Vorwärmerstränge, üblicherweise ein Calcinator und zwei Vorwärmerstränge, derart angeordnet sind, dass sich sowohl die Material, als auch die Gas-Ströme (im Gegenstrom) überkreuzen (zwei Vorwärmerstränge überkreuzen sich, sind aber sequentiell angeordnet).

In weiteren bevorzugten Ausgestaltungsformen der vorliegenden Erfindung werden integrierte Calcinatoren verwendet. Dies bedeutet, dass ein umlaufender Calciumcarbonat- bzw. Calciumoxid-Strom vorliegt. Diese Ausgestaltungsform wird insbesondere dann umgesetzt, wenn der Drehofen eine Abgasmatrix mit so geringen CO₂ Konzentrationen hat, dass das Equipment zur Abscheidung von CO₂ besonders groß und/oder kostenaufwändig werden würde.

Ein großer Vorteil der vorliegenden Erfindung ist, dass durch den Verzicht auf eine Abgas Rezirkulation die Anlage kleiner ausgestaltet werden kann, was immense apparative und monetäre Vorteile in sich birgt.

In verschiedenen Ausgestaltungsformen der vorliegenden Erfindung erfolgt eine Gas-Regelzuführung mit dem Zweck der Regelung der Temperatur in den Calcinator. Auf diese Art und Weise kann die NOx-Bildung kontrolliert werden. Gleichsam ist es auch möglich, dass eine Gas-Regelzuführung mit dem Zweck der Regelung der Gasmenge in den Calcinator erfolgt; entweder alternativ oder zusätzlich zu der Temperaturregelung.

In bevorzugten Ausführungsformen der vorliegenden Erfindung erfolgt diese Gas-Regelzuführung bereits nach dem ersten Abscheide-Zyklon. In anderen Varianten kann die Gas-Regelzuführung alternativ oder ergänzend zu der Zuführung nach dem ersten Abscheider Zyklon nach einem späteren oder sogar nach dem vorletzten Abscheider Zyklonen erfolgen.

Eine Ausgestaltung der vorliegenden Erfindung betrifft ein Verfahren zur Herstellung von hydraulischem Zementklinker aus mindestens einem Ausgangsstoff, bestehend aus mindestens den Schritten Vorwärmen des Ausgangsmaterials, Calcinieren des vorgewärmten Ausgangsstoffes, Brennen des calcinierten Ausgangsstoffes mit dem Ziel, hydraulisch aktive Mineralphasen zu erzeugen, Kühlung des hydraulischen Bindemittels, dadurch gekennzeichnet, dass das Vorwärmen in einem Zyklonvorwärmer geschieht, in dem das Verhältnis von zugeführtem Feststoff und Abgas größer als 1 bis 2 kg Feststoff je 1 kg Gas ist, bevorzugt 1,3 bis 1,9 kg Feststoff je kg Gas.

Eine Ausgestaltung der vorliegenden Erfindung betrifft ein Verfahren zum Bertreiben einer Anlage zur Herstellung von hydraulischem Zementklinker, bestehend aus mindestens einem Zyklonvorwärmer, einem Flugstromcalcinator, einem Drehofen und einem Klinkerkühler, dadurch gekennzeichnet, dass der Flugstromcalcinator über einen nicht-senkrechten Abschnitt verfügt, in dem grobe Brennstoffe mit mehr als 100 mm Kantenlänge (das heißt nicht flugfähige Größe) aufgegeben und von den heißen Gasen im Calcinator überstrichen werden.

Eine Ausgestaltung der vorliegenden Erfindung betrifft ein Verfahren zur Herstellung von hydraulischem Zementklinker aus mindestens einem Ausgangsstoff, bestehend aus mindestens den Schritten Trocknen und Mahlen des Rohmaterials, Vorwärmen des Ausgangsmaterials, Calcinieren des vorgewärmten Ausgangsstoffes, Brennen des calcinierten Ausgangsstoffes mit dem Ziel, hydraulisch aktive Mineralphasen zu erzeugen, Kühlung des hydraulischen Bindemittels, dadurch gekennzeichnet, dass heiße Luft aus dem Klinkerkühler wenigstens teilweise der Vorwärmung und anschließend der Trocknung und Mahlung zugeführt wird wobei eine Vermischung mit dem Abgas aus dem Calcinier- und Brennprozess vermieden wird.

In einer Ausgestaltung der vorliegenden Erfindung ist das sauerstoffhaltige Gas N₂-abgereicherte Luft, insbesondere sehr stark N₂-abgereicherte Luft.

In einer Ausgestaltung der vorliegenden Erfindung ist das sauerstoffhaltige Gas stark mit O₂ angereicherte Luft.

In einer Ausgestaltung der vorliegenden Erfindung ist das sauerstoffhaltige Gas reiner (technischer) Sauerstoff, dies ist eine bevorzugte Ausgestaltung der vorliegenden Erfindung.

In einer Ausgestaltung der vorliegenden Erfindung ist das sauerstoffhaltige Gas keine O₂/CO₂-Mischung.

In einer Ausgestaltung der vorliegenden Erfindung ist der zugeführte Gasstrom kein rezirkuliertes Gas.

In einer Ausgestaltung der vorliegenden Erfindung enthält der zugeführte Gasstrom kein rezirkuliertes Gas.

In einer Ausgestaltung der vorliegenden Erfindung ist das sauerstoffhaltige Gas keine Luft bzw. keine behandelte oder aufgearbeitete Luft. Dies ist eine bevorzugtere Ausgestaltung.

Zu berücksichtigen ist, dass durch den Betrieb der Anlage im Unterdruck möglicherweise Luft in geringer Menge von außen eingesaugt wird. Geringe Menge bedeutet in diesem Falle weniger als 10 Vol.-%, insbesondere 1 bis 5 Vol.-%. Diese eventuell von außen angesaugte Luft wird bei der Definition des sauerstoffhaltigen Gases nicht berücksichtigt.

Im Rahmen der vorliegenden Erfindung liegt in einigen Ausführungsformen die gesamte durch Verbrennung und Calcination erzeugte Abgasmenge für das Bindemittel (Zementklinker) bei 0,50 bis 0,70 Nm³/kg Klinker. Ein Nm³ Gas entspricht dabei einem m³ Gas bei einem Druck von 101,325 kPa bei einer Temperatur von 273,15 K.

Im Rahmen der vorliegenden Erfindung ist es möglich nach dem Vorwärmer CO₂ mit einem stark erhöhten Reinheitsgrad zu erhalten, so dass die weitere Aufarbeitung im Vergleich zum bisherigen Stand der Technik erleichtert bzw. günstiger möglich ist.

In manchen Ausführungsformen der vorliegenden Erfindung kann in einem Vorwärmerzug ein Carbonator angeordnet sein. Ein solcher Carbonator wird bevorzugt nur eingesetzt bzw. betrieben, wenn die aus dem Ofen, bevorzugt Drehrohrofen, austretenden und in den Vorwärmerstrang eingeleiteten Abgase eine Abgasmatrix aufweisen, die eine ökonomische Aufbereitung des CO₂ unnötig verteuern würde. Eine solche Abgasmatrix ist charakterisiert dadurch, dass das Abgas einen Gehalt von weniger als 35 Vol.-% CO₂ im trockenen Bezugszustand aufweist (trockener Bezugszustand heißt, dass aus dem Abgas die Feuchtigkeit herausgerechnet wird).

In einer ersten besonderen Ausführungsform der vorliegenden Erfindung kann das Verfahren als ein Verfahren umfassend einen separaten Oxyfuelcalcinator mit konventionell gefeuertem Ofen bezeichnet werden.

Dabei umfasst die Anlage zur Durchführung des Verfahrens einen Calcinator zur Materialcalcinierung, der einerseits mit einem Brennstofflager verbunden ist und in den andererseits ein sauerstoffhaltiges Gas im Sinne der vorliegenden Erfindung, bevorzugt reiner Sauerstoff, eingeleitet werden kann. In diesem Zusammenhang kann dieser Calcinator also als Oxyfuelcalcinator bezeichnet werden. Dieser Calcinator ist mit einem ersten Vorwärmer zur Materialvorwärmung verbunden. Die Abgase aus diesem ersten Vorwärmer können zur Abwärmenutzung bzw. Abgasbehandlung abgeführt werden, wobei dann diese Abgase zur CO₂-Abtrennung und CO₂-Kompression geführt werden können. Von dort werden die Gase einerseits zum Kamin geführt und in die Atmosphäre entlassen (Restgas) und andererseits zur CO₂-Lagerung bzw. zum CO₂-Transport oder der Weiterverwendung geführt.

Der erste Vorwärmer ("linker" Vorwärmer) ist dabei mit einem zweiten Vorwärmer ("rechter" Vorwärmer) verbunden, Material, d.h. Rohmehl, wird dabei nur in Richtung des zweiten Vorwärmers geführt, nicht aber andersherum. Auch aus dem zweiten Vorwärmer wird Abgas abgezogen und einer weiteren Abgasbehandlung zugeführt. Den zweiten Vorwärmer wird zusätzlich aus dem Drehrohrofen stammendes warmes Abgas zugeführt wird.

Sowohl der erste Vorwärmer als auch der zweite Vorwärmer sind mit einem Rohmehlsilo verbunden, durch das das Rohmehl auf die beiden Vorwärmer aufgegeben wird.

Der Materialstrom des Rohmehls ausgehend vom Rohmehlsilo über die beiden Vorwärmer und den Calcinator folgt dabei den aus dem Stand der Technik bekannten Abläufen. Aus dem Calcinator wird dann das Rohmehl in den Ofen, insbesondere einen Drehrohrofen, geleitet. Abgase aus diesem Ofen können in den zweiten Vorwärmer geleitet werden.

Der (Drehrohr-)Ofen ist dabei in üblicher Weise mit einem Brennstofflager und einem Kühler für den aus dem Ofen austretenden Klinker versehen. Auch aus dem Kühler kann das Abgas einer Abwärmenutzung bzw. Abgasbehandlung geführt werden. Der aus dem Kühler austretende Klinker kann dann einem Klinkersilo zugeführt werden.

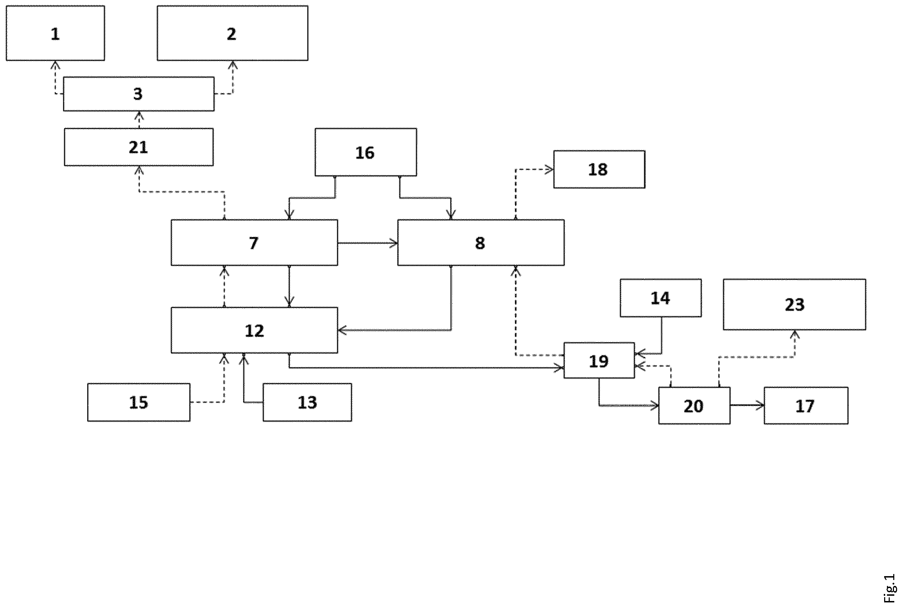

Eine solche Verschaltung bzw. ein solcher Verfahrensablauf, wie gerade beschrieben, ist beispielsweise auch in Figur 1 dargestellt.

Eine zweite besondere Ausführungsform der vorliegenden Erfindung entspricht in weiten Teilen der eben beschriebenen ersten besonderen Ausführungsform.

In dieser zweiten besonderen Ausführungsform ist es zusätzlich vorgesehen, dass das sauerstoffhaltige Gas beziehungsweise der Sauerstoff vor der Zuführung in den Oxyfuelcalcinator vorgewärmt wird. Weiterhin kann in einer solchen Ausführungsform vorgesehen sein, dass entsprechend vorgewärmtes sauerstoffhaltiges Gas beziehungsweise entsprechend vorgewärmter Sauerstoff auch bei der Abwärmenutzung bzw. Abgasbehandlung mitverwendet wird.

Weiterhin abweichend von der eben beschriebenen ersten besonderen Ausführungsform ist die Möglichkeit vorgesehen, dass in verschiedenen Varianten zwischen dem ersten Vorwärmer ("linker" Vorwärmer) und dem zweiten Vorwärmer ("rechter" Vorwärmer) ein Überkreuzen von Materialströmen analog dem bekannten PASEC-Verfahren erfolgen kann. Bei Aufgabe des Rohmehls auf den zweiten Vorwärmer, dem zusätzlich aus dem (Drehrohr-)Ofen stammendes warmes Abgas zugeführt wird, kann dabei das Material in diesem zweiten Vorwärmer getrocknet und vorgewärmt werden. Ein Vorteil ist, dass weniger Energie zur Kondensation von Wasser bei der CO₂-Aufbereitung notwendig ist.

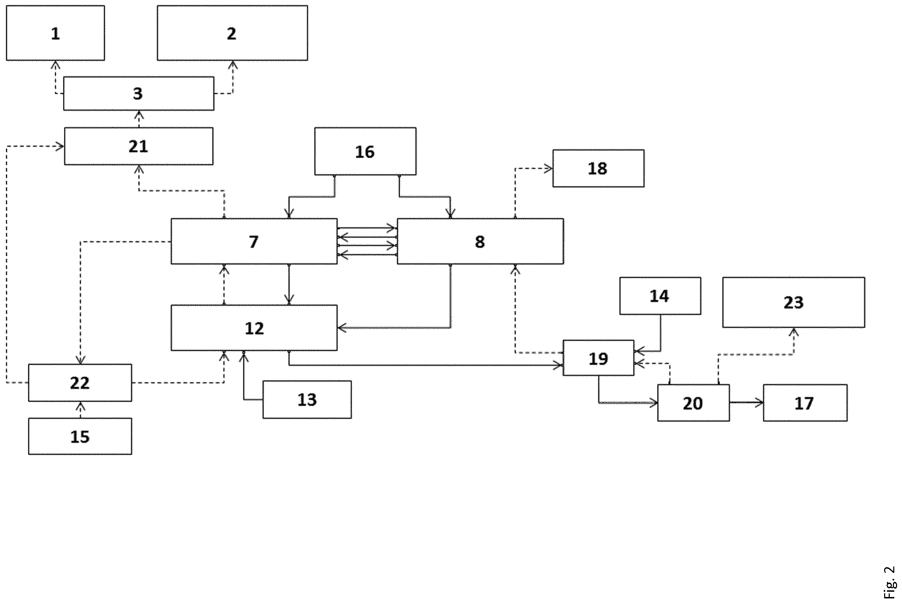

Eine solche Verschaltung bzw. ein solcher Verfahrensablauf, wie gerade beschrieben, ist beispielsweise auch in Figur 2 dargestellt.

In einer dritten besonderen Ausführungsform der vorliegenden Erfindung kann das Verfahren als ein Verfahren umfassend einen separaten Oxyfuelcalcinator mit konventionell gefeuertem Ofen und teilweiser CO₂-Minderung im rechten Vorwärmerstrang (das heißt dem Vorwärmerstrang, dem Abgas aus dem Ofen, insbesondere Drehrohrofen, zugeführt wird) beschrieben werden. Bei dieser Ausführungsform befindet sich im Carbonatorbereich, der sich im rechten Vorwärmerstrang befindet, ein Kühler; mit diesem Kühler wird die Carbonatisierungstemperatur eingestellt.

Auch bei dieser Ausführungsform ist der prinzipielle, grundlegende Aufbau dem Fachmann bekannt. Im Unterschied zu der zuerst beschriebenen Ausführungsform ist statt eines zweiten Vorwärmers ("rechter" Vorwärmer) jetzt ein Vorwärmerstrang angeordnet, bestehend aus einem zweiten, oben angeordneten, Vorwärmer und einem dritten, unten angeordneten, Vorwärmer, zwischen denen ein Carbonator angeordnet ist. Bei dieser Ausgestaltung findet ein Stoffaustausch zwischen dem ersten Vorwärmer und zweiten Vorwärmer statt (in beiden Richtungen) sowie zwischen dem ersten Vorwärmer und dem dritten Vorwärmer (ebenfalls in beiden Richtungen). Zudem wird das aus dem Oxyfuelcalcinator austretende Material aufgeteilt in einen Teil, der in den Ofen, insbesondere Drehrohrofen, geführt wird und einen zweiten Teil, der in den Carbonator geführt wird.

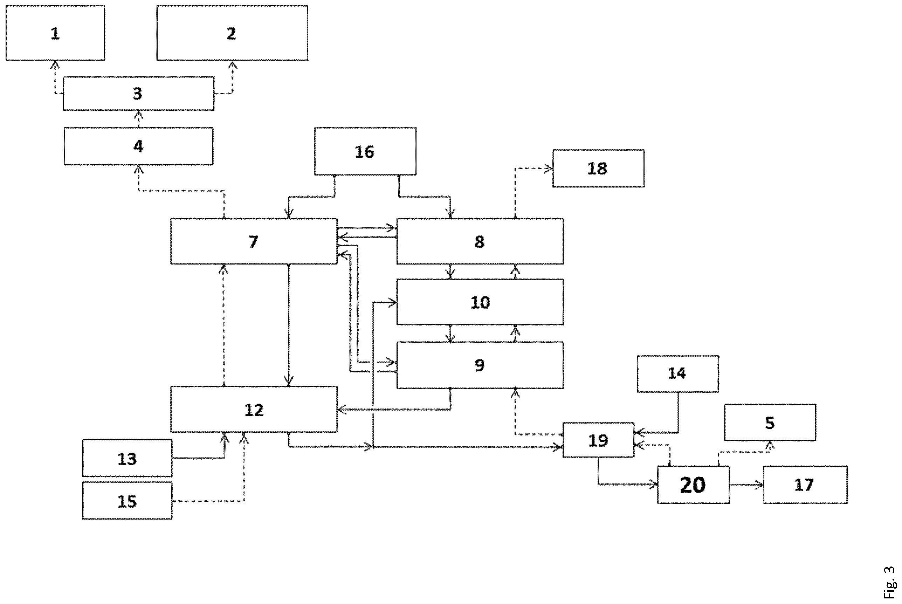

Eine solche Verschaltung bzw. ein solcher Verfahrensablauf, wie gerade beschrieben, ist beispielsweise auch in Figur 3 dargestellt.

In einer vierten besonderen Ausführungsform der vorliegenden Erfindung kann das Verfahren als ein Verfahren umfassend einen separaten Oxyfuelcalcinator mit konventionell gefeuertem Ofen und teilweiser CO₂-Minderung im rechten Vorwärmerstrang (das heißt dem Vorwärmerstrang, dem Abgas aus dem Ofen, insbesondere Drehrohrofen, zugeführt wird) beschrieben werden. Bei dieser Variante befindet sich im Carbonatorbereich, der sich im rechten Vorwärmerstrang befindet, *kein* Kühler zum Einstellen der Carbonatisierungstemperatur.

Diese Ausführungsform unterscheidet sich von der eben beschriebenen dritten besonderen Ausführungsform darin, dass eine Materialaufgabe vom Rohmehlsilo lediglich auf den zweiten, oben angeordneten, Vorwärmer ("rechter" Vorwärmer) erfolgt, nicht aber auf den ersten Vorwärmer. Ein Materialaustausch zwischen den beiden Vorwärmersträngen (erster Vorwärmer auf der einen (linke) Seite und zweiter Vorwärmer, Carbonator und dritter Vorwärmer auf der anderen (rechten) Seite) erfolgt nur ausgehend vom dritten, unten angeordneten, Vorwärmer zum ersten Vorwärmer.

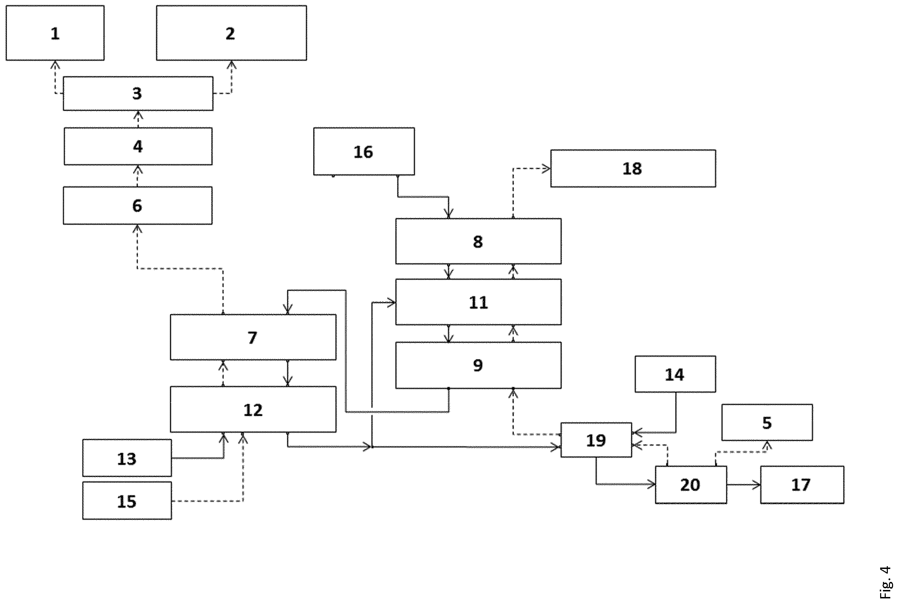

Eine solche Verschaltung bzw. ein solcher Verfahrensablauf, wie gerade beschrieben, ist beispielsweise auch in Figur 4 dargestellt.

Es ist zu berücksichtigen, dass bei der Beschreibung dieser soeben dargestellten vier besonderen Ausführungsformen selbstverständlich nicht alle in Realität umgesetzten Merkmale dargestellt sind, sondern das Verfahren und der Anlagenaufbau sind entsprechend vereinfacht dargestellt, wie sich für den Fachmann sofort ohne weiteres ergibt.

In speziellen Ausführungsformen der vorliegenden Erfindung wird keine Luft aus dem Drehofen in den Calcinator geleitet. In anderen speziellen Ausführungsformen der vorliegenden Erfindung sind die ersten und zweiten (und gegebenenfalls weiteren) Vorwärmer bzw. Vorwärmerstränge nicht voneinander unabhängig. Diese speziellen Ausführungsformen können explizit mit den anderen genannten Ausführungsformen kombiniert werden, insbesondere den mit I bis XVIII bezeichneten Ausführungsformen.

Die Vorteilhaftigkeit der vorliegenden Erfindung ergibt sich unter anderem aus folgenden Aspekten: Da Ofen und Vorwärmer immer nach der Gasmenge projektiert werden, besteht die Vorteilhaftigkeit bei Wegfallen von Stickstoff aus der Mischung darin, dass neue Anlagen wesentlich kleiner ausgeführt sein können und dadurch erheblich kostengünstiger werden, oder bestehende Anlagen bei Umstellung mit wesentlich höherer Kapazität betrieben werden könnten.

Ein vorteilhafter Aspekt der vorliegenden Erfindung ergibt sich durch die Einleitung eines sauerstoffhaltigen Gases mit eine hohen Sauerstoffgehalt oder reinen Sauerstoff in den Calcinator und die Tatsache, dass keine Rezirkulation der Vorwärmergase (Trägergase) daraus, dass entsprechend die Gasmengen im Calcinator und nachfolgenden Vorwärmer erheblich reduziert werden.

Dies ermöglicht eine erheblich kleinere Dimensionierung des Calcinators und des nachfolgenden Vorwärmers/der nachfolgen Vorwärmer. Mit dieser Reduzierung der Anlagengröße geht eine Reduzierung der an die Umgebung wärmeabgebenden Flächen einher. Dies reduziert einerseits die Wärmeverluste der Aggregate, aber auch die spezifisch eintretende Falschluftmenge und erhöht damit die thermische Energieeffizienz der Anlage. Ferner wird durch die erhebliche Reduzierung des zu fördernden Gasstromes eine erhebliche Einsparung im notwendigen elektrischen energieverbrauch erzielt.

Die Verringerung der Gasmenge führt automatisch zu einer Erhöhung der Feststoffbeladung in der Gasphase (vgl. oben), wobei dieser Sachverhalt sowohl im Calcinator als auch in den Steigleitungen der Vorwärmerzyklone zu beachten ist. Hier werden Gasgeschwindigkeiten vorgesehen, die einen ausreichenden Transport der Partikel (Rohmehlpartikel) in der Gasphase sicherstellen. Mit sinkendem Durchmesser der Leitungen steigt die Froude-Zahl, die ein wesentlicher Indikator für die Fähigkeit der Gasphase ist, Feststoff zu transportieren. Bei großen Leitungsdurchmessern kann bei hohen Feststoffbeladungen zusätzlich die Gasgeschwindigkeit angehoben werden, um die Tragfähigkeit der Gasphase für den Feststoff zu gewährleisten. Alternativ sind, im Rahmen der vorliegenden Erfindung, mehrere parallel geschaltete Systeme umsetzbar (um den Rohrdurchmesser zu reduzieren) oder eine Teilrückführung von Gasen, insbesondere im Calcinatorbereich. Eine teilweise, gesteuerte oder geregelte Rückführung von Calcinatorabgas (nach Zyklonabscheider) kann insbesondere vorteilhaft sein, um Temperaturspitzen zu reduzieren und damit Schadstoffemissionen, wie thermisches NOx (der Stickstoff stammt aus dem Brennstoff) zu reduzieren oder die Verbrennung von Brennstoffen mit schwankendem Heizwert auszugleichen.

Grundsätzlich kann eine globale Erhöhung der Geschwindigkeit, falls gewünscht, eingestellt werden und gegebenenfalls mit Einbauten gekoppelt werden, die eine lokale Erhöhung der Geschwindigkeit und/oder lokal eine wirksame Dispersion des Feststoffs bewirken.

Zwar wird die vorliegende Erfindung ohne Rauchgaszirkulation dargestellt, jedoch ist es in verschiedenen Varianten der vorliegenden Erfindung möglich die erfindungsgemäßen Maßnahmen mit einer (internen) Rauchgaszirkulation zu verbinden.

Die verschiedenen Ausgestaltungen, Ausführungsformen und Varianten der vorliegenden Erfindung, beispielsweise, aber nicht auf diese beschränkt, der verschiedenen Ansprüche, können dabei beliebig miteinander kombiniert werden, sofern solche Kombinationen sich nicht widersprechen.

Die vorliegende Erfindung wird im Folgenden mit Bezugnahme auf die Zeichnungen näher erläutert. Die Zeichnungen sind dabei nicht limitierend auszulegen und nicht maßstabsgetreu. Weiterhin enthalten die Zeichnungen nicht alle Merkmale, die übliche Anlagen aufweisen, sondern sind auf die für die vorliegende Erfindung und ihr Verständnis wesentlichen Merkmale reduziert.

### Figurenbeschreibung:

In den Figuren bezeichnen gestrichelte Linien (Pfeile) einen Gastransfer und durchzogene Linien (Pfeile) einen Material bzw. Stofftransfer.
Figur 1 zeigt ein Flowchart eines auf der Oxyfueltechnologie basierenden Verfahrens, bei dem aus dem Ofen austretendes heißes Gas in Vorwärmer 2 geführt wird, der wiederum Material von Vorwärmer 1 empfängt.
Figur 2 zeigt ein Flowchart eines auf der Oxyfueltechnologie basierenden Verfahrens, bei dem ähnlich wie in Figur 1 warme Abluft aus dem Ofen in Vorwärmer 2 geführt wird. Im Unterschied zu Figur 1 findet jedoch zwischen Vorwärmer 1 und Vorwärmer 2 ein Materialaustausch statt. Insbesondere findet dort ein Überkreuzen von Material strömen analog dem PASEC-Verfahren statt. Zwar ist es prinzipiell genauso gut möglich die Ofenabgase in Vorwärmer 1 zu führen allerdings hat die Aufgabe auf Vorwärmer 2 den Vorteil, dass dann rechts getrocknet werden kann, d.h. es wird weniger Energie zur Kondensation von Wasser bei der CO₂-Aufbereitung notwendig.
Figur 3 zeigt ein Flowchart eines auf der Oxyfueltechnologie basierenden Verfahrens, bei dem die heißen Abgase aus dem Verbrennungsofen auf den Vorwärmer 3 aufgegeben werden und dann weiter durch den Carbonator zum Vorwärmer 2 fließt. Dadurch wird eine teilweise CO₂-Minderung im rechten Strang erreicht. Im rechten Strang ist darüber hinaus ein Kühler im Carbonatorbereich angeordnet.
Figur 4 zeigt ein Flowchart eines auf der Oxyfueltechnologie basierenden Verfahrens, bei dem ähnlich wie bei dem Verfahren gemäß Figur 3 vorgegangen wird, im Unterschied dazu allerdings im Carbonatorbereich kein Kühler vorhanden ist.

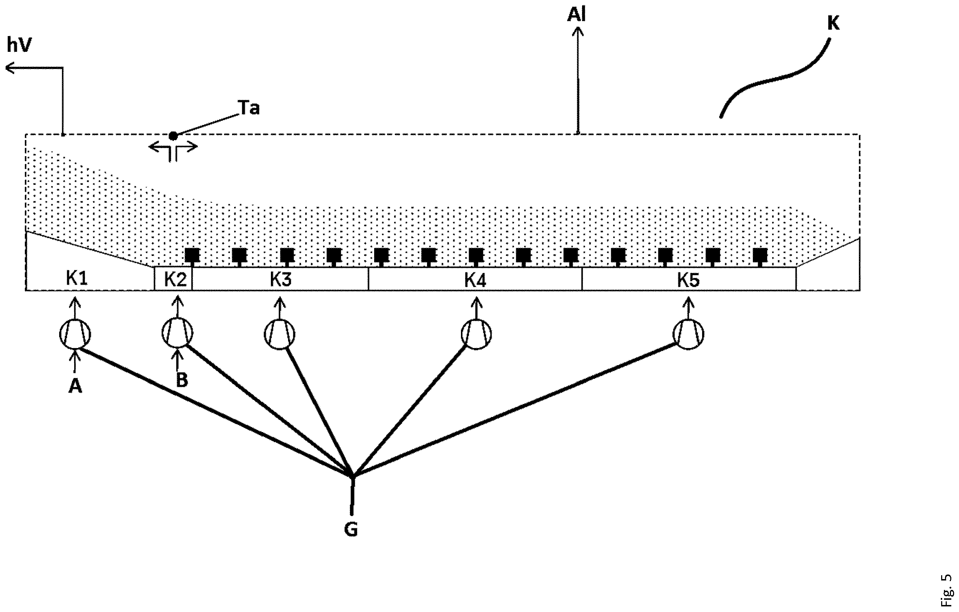

Figur 5 zeigt eine Vorrichtung, bei der dem Drehofen ein sauerstoffhaltiges Gas zugeführt wird; diese Vorrichtung kann mit der vorliegenden Erfindung kombiniert werden. Figur 5 zeigt dabei illustrativ einen Kühler (Klinkerkühler) K, der in fünf verschiedene Kühlzonen K1 bis K5 aufgeteilt ist. Dabei wird über die verschiedenen Gebläse G entsprechend Gas zugeführt. Über die den Zonen K3 bis K5 zugeordneten Gebläse G wird Kühlluft für den Klinker zugeführt, jedoch keine Verbrennungsluft zum Ofen. Über das der Zone K1 zugeordnete Gebläse wird das sauerstoffhaltige Gas A zugeführt, das als Verbrennungsluft in den Ofen geleitet wird. Über das der Zone K2 zugeordnete Gebläse wird Sperrgas B zugeführt. Dieses Sperrgas kann beispielsweise zu 85 Volumenprozent oder mehr aus Kohlendioxid bestehen, wobei der Rest Inertgas ist oder beispielsweise zu 85 Volumenprozent oder mehr aus Sauerstoff bestehen, wobei der Rest in Inertgas ist. Mit Inertgas sind dabei bevorzugt Komponenten wie Wasserdampf, Argon, etc. gemeint. In beiden Fällen dient das Gas B als Sperrgas für die Abdichtung des Sauerstoffbereichs von dem Luftbereich des Kühlers. Ferner ist in Figur 1 eine CO₂-Scheide Ta dargestellt, die durch die Aufgabe des Sperrgases funktioniert oder in Form einer mechanischen Gasscheide ausgebildet ist.

### Bezugszeichenliste:

K Kühler (Klinkerkühler)
Ta Gastrenneinrichtung mit Sperrgas (CO₂-Scheide (Sperrgas)) oder mechanische Gastrenneinrichtung bzw. mechanische Gastrenneinrichtung in Kombination mit Sperrgas (CO₂-Scheide (mechanisch bzw. Kombination mechanisch/Sperrgas))
G Gebläse
K1 Kühlzone 1 (erste Kühlzone)
K2 Kühlzone 2 (zweite Kühlzone)
K3 Kühlzone 3 (dritte Kühlzone)
K4 Kühlzone 3 (vierte Kühlzone)
K5 Kühlzone 5 (fünfte Kühlzone)
A sauerstoffhaltiges Gas
B Sperrgas
hV heiße Verbrennungsluft
Al Abluft
1 Kamin/Atmosphäre (Restgas)
2 CO₂-Transport/Lagerung/Weiterverwendung
3 CO₂-Abtrennung und Kompression
4 Abgasbehandlung (aus Vorwärmer)
5 Abgasbehandlung (aus Kühler)
6 Abwärmenutzung/Verstromung
7 Vorwärmer 1 (Materialvorwärmung)
8 Vorwärmer 2 (Materialvorwärmung)
9 Vorwärmer 3 (Materialvorwärmung)
10 Carbonator (mit Kühlung)
11 Carbonator (ohne Kühlung)
12 Oxyfuelcalcinator (Materialcalcinierung)
13 Brennstofflager (für Calcinator)
14 Brennstofflager (für Ofen)
15 Sauerstoffhaltiges Gas/Sauerstoff
16 Rohmehlsilo
17 Klinkersilo
18 Wärmenutzung/Abgasbehandlung (aus Vorwärmer 2)
19 Ofen (Drehrohrofen)
20 Kühler (Klinkerkühler)
21 Abwärmenutzung/Abgasbehandlung (aus Vorwärmer 1 bzw. Vorwärmer 1 und Vorwärmung sauerstoffhaltiges Gas/Sauerstoff)
22 Vorwärmung sauerstoffhaltiges Gas/Sauerstoff
23 Abwärmenutzung/Abgasbehandlung (aus Kühler (Klinkerkühler))

## Patentansprüche

1. Verfahren zur Herstellung von Zementklinker umfassend die Schritte
a) Vorwärmen des Ausgangsmaterials auf Calcinierungstemperatur,
b) Calcinieren des vorgewärmten Ausgangsstoffes,
c) Brennen des calcinierten Ausgangsstoffes in einem Drehofen (19),
d) Kühlung des Zementklinkers,
e) Zuführen eines sauerstoffhaltigen Gases, das einen Anteil von 15 Vol. % oder weniger Stickstoff und einen Anteil von 50 Vol. % oder mehr Sauerstoff aufweist, in
i) den Calcinator (12),
wobei
- zum Calcinieren keine Gase aus dem Drehofen (19) zugeführt werden,
- zur Vorwärmung Zyklonvorwärmer (7, 8, 9) eingesetzt werden, deren einzelne Zyklone kaskadenartig miteinander verbunden sind, wobei wenigstens ein erster Vorwärmer und ein zweiter Vorwärmer eingesetzt werden,
- zwischen den einzelnen Zyklonvorwärmern (7, 8, 9) Material- und/oder Gas-Transfer möglich ist, wobei Material- und/oder Gas-Transfer zwischen dem ersten Vorwärmerstrang und dem zweiten Vorwärmerstrang möglich ist, und
- keine Rezirkulation der Vorwärmerabgase erfolgt, und
**dadurch gekennzeichnet, dass** in Schritt a) das Verhältnis von zugeführtem Feststoff zu Abgas auf 1,3 kg bis 1,9 kg Feststoff je 1 kg Gas eingestellt wird, wobei zwischen den Vorwärmern eines mehrzügigen Zyklonvorwärmers (7, 8, 9) eine Überkreuzung von Mehlströmen nach jeder Stufe erfolgt, aber keine Kreuzung der Gasströme.

2. Verfahren nach Anspruch 1, **dadurch gekennzeichnet, dass** Schritt e) zusätzlich ii) das Zuführen von sauerstoffhaltigem Gas in den Drehofen (19) umfasst.

3. Verfahren nach einem der Ansprüche 1 bis 2, **dadurch gekennzeichnet, dass** zweizügige Zyklonvorwärmer (7, 8, 9) mit zwei bis sechs Stufen, bevorzugt fünf Stufen eingesetzt werden.

4. Verfahren nach einem der Ansprüche 1 bis 3, **dadurch gekennzeichnet, dass** die Vorwärmung unter Einbindung mindestens eines Carbonators (10, 11) erfolgt.

5. Verfahren nach einem der Ansprüche 1 bis 4, **dadurch gekennzeichnet, dass** ein einen Carbonator (10, 11) aufweisender Vorwärmer eines zweiten Vorwärmerzuges mit aus dem Drehofen (19) kommenden Abgasen beschickt wird, wobei die Abgase einen geringen Anteil CO₂ von weniger als 35% in trockenem Bezugszustand aufweisen.

6. Verfahren nach einem der Ansprüche 4 oder 5, **dadurch gekennzeichnet, dass** die Carbonatisierungstemperatur mittels eines Carbonators (10, 11) mit Kühler eingestellt wird.

7. Verfahren nach einem der Ansprüche 1 bis 6, **dadurch gekennzeichnet, dass** in Schritt b) das Verhältnis von zugeführtem Feststoff zu Abgas auf größer als 1,0 kg, vorzugsweise größer als 1,3 kg Feststoff je 1 kg Gas, bevorzugt 1 bis 2 kg/kg Feststoff zu Gas, besonders bevorzugt 1,3 bis 1,9 kg/kg Feststoff zu Gas, eingestellt wird.

8. Verfahren nach einem der Ansprüche 1 bis 7, **dadurch gekennzeichnet, dass** in den Calcinator (12), der bevorzugt ein über einen nicht-senkrechten Abschnitt verfügender Flugstromcalcinator ist, grobe Brennstoffe mit einer Kantenlänge von 70 mm oder mehr, bevorzugt 100 mm oder mehr, aufgegeben werden, so dass sie von den heißen Gasen im Calcinator (12) überstrichen werden.

9. Verfahren nach einem der Ansprüche 1 bis 8, **dadurch gekennzeichnet, dass** das Gas
i) 75 Vol.-% oder mehr Sauerstoff enthält, bevorzugt 85 Vol.-% oder mehr, 90 Vol.-% oder mehr, 95 Vol.-% oder mehr, 98 Vol.-% oder mehr oder 99% Vol.-% oder mehr, oder
ii) 10 Vol.-% oder weniger Stickstoff enthält, bevorzugt 8 Vol.-% oder weniger, 6 Vol.-% oder weniger, 4 Vol.-% oder weniger, oder Stickstoff unterhalb der Nachweisgrenze enthält,
oder
iii) 75 Vol.-% oder mehr Sauerstoff enthält, bevorzugt 85 Vol.-% oder mehr, 90 Vol.-% oder mehr, 95 Vol.-% oder mehr, 98 Vol.-% oder mehr oder 99% Vol.-% oder mehr, und 10 Vol.-% oder weniger Stickstoff enthält, bevorzugt 8 Vol.-% oder weniger, 6 Vol.-% oder weniger, 4 Vol.-% oder weniger, oder Stickstoff unterhalb der Nachweisgrenze,
enthält.

10. Verfahren nach einem der Ansprüche 1 bis 6, **dadurch gekennzeichnet, dass** die in den Calcinator (12) zudosierten Mengen von sauerstoffhaltigem Gas und Brennstoff in Abhängigkeit von Calcinierungstemperatur und Temperatur im Vorwärmer geregelt werden.

11. Verfahren nach einem der Ansprüche 1 bis 10, **dadurch gekennzeichnet, dass** zusätzlich eine Rezirkulation der Calcinatorabgase erfolgt.

## Claims

1. Process for producing cement clinker, comprising the steps of
a) preheating of the starting material to the calcination temperature,
b) calcination of the preheated starting material,
c) firing of the calcined starting material in a rotary furnace (19),
d) cooling of the cement clinker,
e) introduction of an oxygen-containing gas having a proportion of 15% by volume or less of nitrogen and a proportion of 50% by volume or more of oxygen into
i) the calciner (12),
wherein
- no gases from the rotary furnace (19) are fed to the calcination,
- cyclone preheaters (7, 8, 9) of which the individual cyclones are connected to one another in a cascade-like manner are used for preheating, where at least one first preheater and one second preheater are used,
- mass transfer and/or gas transfer is/are possible between the individual cyclone preheaters (7, 8, 9), with mass transfer and/or gas transfer being possible between the first preheater section and the second preheater section, and
- no recirculation of the preheater exhaust gases occurs,
**characterized in that** the ratio of solid fed in to exhaust gas in step a) is set to greater than 1.3 kg to 1.9 kg of solid per 1 kg of gas, where crossing over of meal streams but no crossing of the gas streams occurs after each stage between the preheaters of a multitrain cyclone preheater (7, 8, 9) .

2. Process according to Claim 1, **characterized in that** step e) additionally comprises
ii) the introduction of oxygen-containing gas into the rotary furnace (19).

3. Process according to Claim 1 or 2, **characterized in that** two-train cyclone preheaters (7, 8, 9) having from two to six stages, preferably five stages, are used.

4. Process according to any of Claims 1 to 3, **characterized in that** preheating occurs with involvement of at least one carbonator (10, 11).

5. Process according to any of Claims 1 to 4, **characterized in that** a preheater having a carbonator (10, 11) of a second preheater train is supplied with exhaust gases coming from the rotary furnace (19), where the exhaust gases have a small proportion of CO₂ of less than 35% in the dry reference state.

6. Process according to either of Claims 4 and 5, **characterized in that** the carbonatization temperature is set by means of a carbonator (10, 11) having a cooler.

7. Process according to any of Claims 1 to 6, **characterized in that** the ratio of solid fed in to exhaust gas in step b) is set to greater than 1.0 kg, preferably greater than 1.3 kg, of solid per 1 kg of gas, preferably from 1 to 2 kg/kg of solid to gas, particularly preferably from 1.3 to 1.9 kg/kg of solid to gas.

8. Process according to any of Claims 1 to 7, **characterized in that** coarse fuels having an edge length of 70 mm or more, preferably 100 mm or more, are introduced into the calciner (12) which is preferably an entrained flow calciner having a nonvertical section, so that the hot gases in the calciner (12) flow over them.

9. Process according to any of Claims 1 to 8, **characterized in that** the gas
i) contains 75% by volume or more of oxygen, preferably 85% by volume or more, 90% by volume or more, 95% by volume or more, 98% by volume or more or 99% by volume or more,
or
ii) contains 10% by volume or less of nitrogen, preferably 8% by volume or less, 6% by volume or less, 4% by volume or less, or has a nitrogen content below the detection limit,
or
iii) contains 75% by volume or more of oxygen, preferably 85% by volume or more, 90% by volume or more, 95% by volume or more, 98% by volume or more or 99% by volume or more, and 10% by volume or less of nitrogen, preferably 8% by volume or less, 6% by volume or less, 4% by volume or less, or has a nitrogen content below the detection limit.

10. Process according to any of Claims 1 to 6, **characterized in that** the amounts of oxygen-containing gas and fuel fed in to the calciner (12) are regulated as a function of the calcination temperature and temperature in the preheater.

11. Process according to any of Claims 1 to 10, **characterized in that** recirculation of the calciner exhaust gases is additionally carried out.

## Revendications

1. Procédé pour la préparation de clinker de ciment, comprenant les étapes
a) préchauffage du matériau de départ à la température de calcination,
b) calcination de la substance de départ préchauffée,
c) cuisson de la substance de départ calcinée dans un four rotatif (19),
d) refroidissement du clinker de ciment,
e) introduction d'un gaz oxygéné, qui présente une proportion de 15% en volume ou moins d'azote et une proportion de 50% en volume ou plus d'oxygène, dans i) le calcinateur (12),
où
- aucun gaz provenant du four rotatif (19) n'est introduit dans la calcination,
- des dispositifs de préchauffage à cyclone (7, 8, 9), dont les différents cyclones sont reliés les uns aux autres en cascade, sont utilisés pour le préchauffage, au moins un premier dispositif de préchauffage et un deuxième dispositif de préchauffage étant utilisés,
- un transfert de matière et/ou de gaz est possible entre les différents dispositifs de préchauffage à cyclone (7, 8, 9), le transfert de matière et/ou de gaz étant possible entre la première ligne et la deuxième ligne de dispositifs de préchauffage et
- aucune recirculation des gaz résiduels des dispositifs de préchauffage n'a lieu et
**caractérisé en ce que**, dans l'étape a), le rapport du solide introduit aux gaz résiduels est réglé à 1,3 kg jusqu'à 1,9 kg de solide par 1 kg de gaz, un croisement des flux de farine ayant lieu entre les dispositifs de préchauffage d'un dispositif de préchauffage à plusieurs trains (7, 8, 9) après chaque étage, mais aucun croisement des flux gazeux n'ayant lieu.

2. Procédé selon la revendication 1, **caractérisé en ce que** l'étape e) comprend en outre
ii) l'introduction de gaz oxygéné dans le four rotatif (19).

3. Procédé selon l'une quelconque des revendications 1 à 2, **caractérisé en ce qu'**on utilise des dispositifs de préchauffage à deux trains (7, 8, 9) présentant deux à six étages, de préférence cinq étages.

4. Procédé selon l'une quelconque des revendications 1 à 3, **caractérisé en ce que** le préchauffage a lieu avec intégration d'au moins un carbonisateur (10, 11).

5. Procédé selon l'une quelconque des revendications 1 à 4, **caractérisé en ce qu'**un dispositif de préchauffage présentant un carbonisateur (10, 11) d'un deuxième train de dispositifs de préchauffage est alimenté en gaz résiduels provenant du four rotatif (19), ces gaz résiduels présentant une faible proportion de CO₂ inférieure à 35% dans un état de référence sec.

6. Procédé selon l'une quelconque des revendications 4 ou 5, **caractérisé en ce que** la température de carbonisation au moyen d'un carbonisateur (10, 11) est réglée à l'aide d'un refroidisseur.

7. Procédé selon l'une quelconque des revendications 1 à 6, **caractérisé en ce que**, dans l'étape b), le rapport de solide alimenté à gaz résiduels est réglé à plus de 1,0 kg, de préférence à plus de 1,3 kg de solide par 1 kg de gaz, de préférence de 1 à 2 kg de solide/kg de gaz, de manière particulièrement préférée de 1,3 à 1,9 kg de solide/kg de gaz.

8. Procédé selon l'une quelconque des revendications 1 à 7, **caractérisé en ce que** des combustibles grossiers, présentant une longueur d'arrête de 70 mm au plus, de préférence de 100 mm ou plus, sont introduits dans le calcinateur (12), qui est de préférence un calcinateur à flux entraîné disposant d'une section non verticale, de telle sorte que lesdits combustibles sont balayés par les gaz chauds dans le calcinateur (12).

9. Procédé selon l'une quelconque des revendications 1 à 8, **caractérisé en ce que** le gaz
i) contient 75% en volume ou plus d'oxygène, de préférence 85% en volume ou plus, 90% en volume ou plus, 95% en volume ou plus, 98% en volume ou plus ou 99% en volume ou plus ou
ii) contient 10% en volume ou moins d'azote, de préférence 8% en volume ou moins, 6% en volume ou moins, 4% en volume ou moins ou de l'azote sous la limite de détection ou
iii) contient 75% en volume ou plus d'oxygène, de préférence 85% en volume ou plus, 90% en volume ou plus, 95% en volume ou plus, 98% en volume ou plus ou 99% en volume ou plus et 10% en volume ou moins d'azote, de préférence 8% en volume ou moins, 6% en volume ou moins, 4% en volume ou moins ou de l'azote sous la limite de détection.

10. Procédé selon l'une quelconque des revendications 1 à 6, **caractérisé en ce que** les quantités de gaz oxygénés et de combustible dosées dans le calcinateur (12) sont réglées en fonction de la température de calcination et de la température dans le dispositif de préchauffage.

11. Procédé selon l'une quelconque des revendications 1 à 10, caractérisé en ce qui qu'une recirculation des gaz résiduels du calcinateur a lieu en plus.
